# EUROPEAN PATENT SPECIFICATION

(11) **EP 3 569 529 B1**
(45) Date of publication and mention of the grant of the patent: **07.06.2023**
(21) Application number: 19181634.7
(22) Date of filing: 14.01.2015
(51) Int. Cl.: B65G 54/02, B65B 61/20

(54) **SYSTEM AND METHOD FOR MERGING ARTICLES AND DOCUMENTS**
SYSTEM UND VERFAHREN ZUM ZUSAMMENFÜHREN VON GEGENSTÄNDEN UND DOKUMENTEN
SYSTÈME ET PROCÉDÉ POUR ASSEMBLER DES ARTICLES ET AVEC DES DOCUMENTS

(30) Priority: 06.02.2014 US 201461936421 P
(43) Date of publication of application: 20.11.2019
(62) Divisional of application: 15701667.6
(73) Proprietor: CALJAN A/S, 8361 Hasselager (DK)
(72) Inventor: HEYDOLPH, Thomas, 81827 München (DE); RÜFFER, Björn, 59558 Lippstadt (DE)
(74) Representative: Patrade A/S

(56) References cited:
- GB-A- 2 500 263
- US-A- 3 908 333
- US-A1- 2003 081 223

## Description

### Background

In many order fulfillment operations, automation can be used to eliminate or reduce the need for manual handling of the goods to be shipped, and the associated paperwork. With advances in scanning, labeling and parcelization or bagging automation and the associated data-handling software, the need for manual intervention is reduced (e.g., minimized). An article to be shipped is placed upon or moves on a conveyor. A scanning station scans an identifier (e.g. a bar code) on the article and the data-handling software determines a customer order associated with the article, and the appropriate shipping address. A labeling station receives this information from the data-handling software, prints the appropriate label, and affixes it to the box, envelope, or shipping bag or package (hereafter the "container"). The article is then inserted in the container, and it is ready to be closed and shipped. One will appreciate that some of these example steps will occur in a different order, or not at all, depending on the operation.

US 2003/081223 A1 discloses an article and document conveyor according to the preamble of independent claim 1. More specifically, a product and document fulfillment system for merging together discrete articles and specific documentation which pertains to each discrete article, and for packaging and labeling the same is disclosed. The system comprises an article conveyor on which discrete articles are carried seriatim, a first machine code reader for reading the unique machine readable code on each discrete article, a printer for printing a specific document pertaining to the article, instruction control means governing the delivery of the appropriate document to be merged with the article, a merging station where the specific document and the article are merged, a second machine code reader for reading the machine readable code on the specific document, first memory and counter means for recognizing the identity of the discrete article at the merging station, and accept/reject means to accept the merged article and specific document when a match occurs, or reject the item when no match occurs.

GB 2 500 263 A discloses a leaflet application apparatus comprising a conveyor for an article, and a conveyor for feeding a leaflet to the article. The leaflet conveyor may comprise multiple pairs of feed belts between which said leaflet is successively received. The feeding is controlled in response to a sensor detecting the approach of an article. The feeder mechanism may feed leaflets from a stack of leaflets by means of a first conveyor engaging a leaflet. A gap between first conveyor and the stack may be controlled in response to a gap sensor.

### Summary

According to a first aspect of the invention, an article and document conveyor according to independent claim 1 is provided. Another aspect of the invention is directed to an article and document processing method according to claim 18. Preferred embodiments are set forth in the dependent claims, the following description and the drawings.

### Brief Description of the Drawings

Figure 1 is an elevation view of an example system for placing an article and associated paperwork in an appropriately labeled container, including automatically creating and combining the paperwork with the article before insertion into the container, according to the teachings disclosed herein.
Figure 2 is an overhead view of the same example system from Figure 1.
Figure 3 is a high-level flowchart of an article and document processing method according to the teachings disclosed herein;
Figure 4 is a three dimensional view of a further embodiment of an article and document conveyor;
Figure 5 is a top view of the article and document conveyor of Fig. 4;
Figure 6 is a vertical sectional view of the article and document conveyor of Fig. 4;
Figure 7 is a horizontal section view of the article and document conveyor of Fig. 4 illustrating the rope guidance in the document merging conveyor and conflated conveyor;
Figure 8a illustrates the operation of document holders and a front stop of the document conveyor of the article and document conveyor of Fig. 4;
Figure 8b shows all document holders and the front stop of the document conveyor of the article and document conveyor of Fig. 4 in their operating position; and
Figure 8c illustrates the release of a document stack by moving the front stop in its stationary position.

### Detailed Description

As discussed above, in known systems, an article to be shipped is placed upon or moves on a conveyor. A scanning station scans an identifier (e.g. a bar code) on the article and the data-handling software determines a customer order associated with the article, and the appropriate shipping address. A labeling station receives this information from the data-handling software, prints the appropriate label, and affixes it to the container. The article is then inserted in the container, and it is ready to be closed and shipped. Some of these steps may occur in a different order, or not at all, depending on the operation.

A missing element in the above example is paperwork inside the container along with the article itself. Most retailers or other shippers prefer to include documents inside the container, along with the article, that pertain to the transaction - for example a customer invoice. It is also often desirable to include other documentation - such as sales brochures for other goods offered by the same retailer, coupons for future purchases, etc.

Conventionally, while creation (i.e. printing) of these documents may have been automated, their collection, assembly, and combination with the article going into the container is a manual process. An operator assembles the documentation, confirms that it is the correct documentation for the article in question, and manually places the documentation with the article before the article and documentation are placed in the container. Alternatively, operations also exist where the documentation is inserted into the container before or after the article itself. This manual aspect of an otherwise highly automated process can lead to process delays as well as human error.

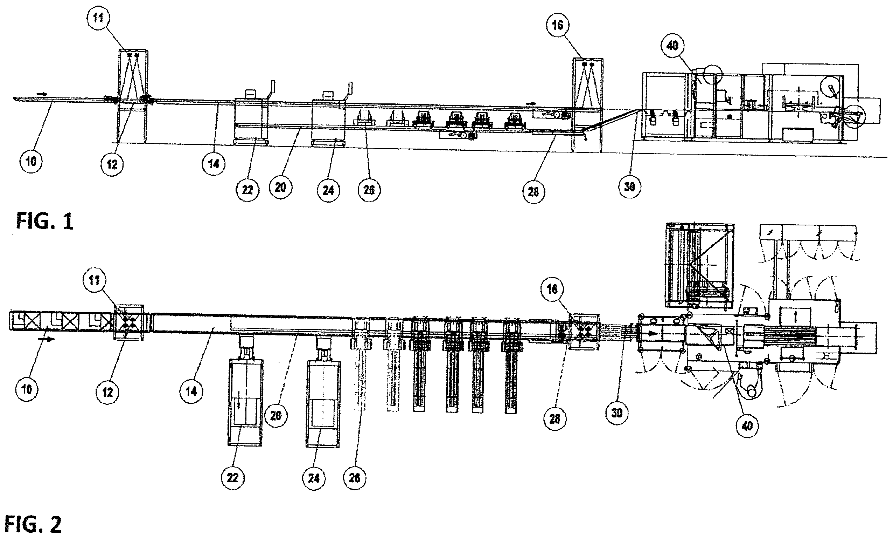

An example system for placing an article and associated paperwork in an appropriately labeled container for shipment is depicted in the Figures 1 and 2. While specific dimensions of certain components are illustrated in the figures, the length, angle, number, position, etc., of the example conveyors and/or other components in the example system may be suitably adapted to the application/circumstance without departing from the teachings disclosed herein. In the illustrated examples, an article conveyor 10 conveys an article such as article A to be shipped from left to right in the sense of the drawings. Articles to be shipped may be placed on the conveyor 10 by an operator, or by an automated picking or other order-fulfillment system. As used herein, the term "conveyor" is used broadly to cover a wide variety of conveying devices, including conventional belt conveyors, powered roller conveyors etc. Moreover, where there is reference to a "conveyor," it may indeed be a series of smaller modular conveyors, as is known in the art. In any event, the articles to be shipped include identifying information or an identifier (e.g. bar code, QRC, RFID tag etc.) that is capable of being read by an automated reader. In some examples, as the article progresses on the conveyor 10, it passes through a reader station 11, which includes its own conveyor 12, and which is capable of reading the identifier on the article. Examples of reader 11 include a bar code scanner, camera and associated software or firmware, RFID reader, etc. In some examples, reader 11 is in communication with a data-handling system (DHS), which is shown schematically in the figures, and which is beyond the scope of this disclosure. Note that throughout this disclosure, reference is made to the DHS being in communication with various other system components. These communication lines have not been specifically shown in the drawings to avoid clutter, but could be wired or wireless lines of communication using any past, present, and/or future communication protocols. Suffice it to say that the DHS houses and processes data associated with the order fulfillment process and communicates bi-directionally with various components including readers, sensors, etc. In this particular case, the DHS is capable of determining the relevant transaction-related data associated with the article that has been identified by reader 11. For the purpose of this disclosure, the transaction-related data includes at least the shipping information, such as the recipient of the article, and the recipient's address (i.e. the ship-to address), which will appear on the shipping label. The transaction-related data also includes information that will appear on a transaction document (e.g. a customer invoice) to be created and placed inside the shipping container (e.g. a box, parcel or shipping bag) along with the article.

To provide for the automated creation and application of the shipping label to the shipping container and automated insertion of the article into the container, the example system includes an integrated bagging machine and label print/apply station 40. One will appreciate that other forms of containers (boxes, shipping envelopes, etc.) could also be used as a shipping container, and that reference to "bag" or "bagging" in this description is not meant to, and does not, limit the scope of this disclosure. Moreover, while the printing, applying and bagging operations are completed in an integrated station, individual stations for each operation could additionally or alternatively also be provided without departing from the teachings of this disclosure. In the illustrated example, the integrated bagging/printing/apply station 40 is in communication with the DHS, which has already identified the article to be shipped based on identification by the reader 11. After the article A is conveyed toward station 40 by conveyor 14, the DHS provides this shipping information to the station 40, which is capable of printing the shipping information on a shipping label and applying it to the shipping bag. The bagging station 40 is also capable of inserting the article into the bag.

In addition to the shipping label, which is affixed to the outside of the bag or other shipping container, it is also desirable to include at least one transaction document on the inside of the container along with the article.

To provide for the automated creation and movement of transaction documents, the example system includes a document sub-system including at least a printer 24 and a document conveyor 20. Once the article has been identified by the reader 11 and that identifying information provided to the DHS, the DHS - which is in communication with the printer 24 - provides a transaction document to be printed to the printer 24. In some examples, the content of the transaction document includes not only transaction-related data such as the content of an invoice, but also identifying information about the article - such as a barcode. As will be detailed below, in some examples, the article-identifying information printed on the transaction document will be used to confirm that the transaction document and the article are properly paired with each other before their insertion into the shipping container. Once the transaction document has been printed by printer 24, it is deposited on conveyor 20 for movement toward the bagging/printing/apply station 40 (i.e., to the right in the sense of Figure 1). The document is deposited face-down on the conveyor 20 for reasons that will become apparent below. As shown in Figure 1, the document conveyor 20 is positioned below, and parallel to, the article conveyor 10, the reader 11, and the conveyor 14. While this may represent a preferred orientation of the document conveyor 20 relative to the article conveyor in terms of spacing and coordination, other locations and/or orientations are also possible - such as the document conveyor being 20 above or to the side of the article conveyor, or even placed in a non-parallel orientation relative to the article conveyor.

The operational parameters of document conveyor 20 (e.g. start/stop time, position, belt speed, etc.) as well as the operational parameters of other system components, may be controlled by a processor, such as a programmable logic controller (PLC). The PLC is in communication with the DHS, and includes programming to control various system components during its operation according to data received from the DHS. As with the DHS, reference is made throughout this disclosure to the PLC (represented schematically in the drawings) being in communication with various other system components such as position and/or speed sensors, motor controllers, etc. These communication lines have not been specifically shown in the drawings to avoid clutter, but could be wired or wireless lines of communication using any past, present, and/or future communication protocol(s). In some examples, the DHS and the PLC are implemented by one or more processors such as a processor commonly available from Intel^{®}.

In some examples, once the transaction document has been printed and conveyed, under the control of the PLC, it needs to be paired with the article, both physically and in terms of their identities, before they are inserted together into the shipping container. To provide for these functions, the example system of Figure 1 includes a conflation sub-system, including at least a staging table 28, a document merging conveyor 29, an article merging conveyor 29' and a conflated conveyor 31, as well as readers 16 and 16' for reading identifier information on the article and associated transaction document.

In general, the conflation sub-system of the illustrated example is provided to read and identify a given article and a given transaction document, to communicate with the DHS to confirm that they are associated with the same transaction order, and - assuming such confirmation - to have the movement of the article and transaction document coordinated by the PLC so that they are brought together physically before being inserted into the shipping container labeled with the same shipping information as the order represented by the properly paired article and transaction document. That is, a conflation operation as described herein refers to the physical combining or stacking of an article with a corresponding transaction document for subsequent insertion into a shipping container. Toward that end, the transaction document that was printed by the printer 24 and conveyed on conveyor 20 is deposited on the staging table 28, and conveyed thereby toward the document merging conveyor 29. As can be seen in the illustrated example of Fig. 1, the staging table comprises a series of individually-driven conveyor modules (5 in this case). In some examples, the speed of each of the multiple modules can be individually controlled by the PLC. In particular, these modules may be controlled by the PLC to coordinate the movement of the transaction document with the article being conveyed. If, for example, printing time or other factors have caused the transaction document to lag the article, the PLC can use the modules of the staging table to accelerate the movement of the transaction document to "catch it up" to the article, based on the programming within the PLC. In some examples, a series of conveyor modules could be placed on the conveyance path of the article to appropriately control the speed at which the article moves relative to the position of the transaction document. In some examples, the article is conveyed on article conveyor 14, under the control of the PLC to a second reader 16. Reader 16 reads the identifying information on the article. Similarly, in some examples, as the transaction document reaches the end of the staging table 28 and moves across the small gap to the document merging conveyor 29, another reader 16' (illustratively disposed beneath the conveyor 29, and looking through the gap between the staging table 28 and the merger conveyor 29) reads the identifying information that was printed on the (faced down) transaction document. Each reader 16, 16' provides the identifying information to the DHS. The DHS is adapted to compare the two identifiers (e.g., the identifying information) for the purpose of validating that the corresponding article and transaction document are properly paired, for example, by being associated with the same transaction order. In the event that the DHS confirms that the article and transaction document are properly paired, in some examples, it communicates this confirmation or validation to the PLC. The PLC then controls the movement of the document merging conveyor 29 and the article merging conveyor 29' to move the transaction document up the conveyor 29 and the article across conveyor 29', such that the document is combined with the article by being placed underneath the article at the conflation area 30 with sufficient accuracy to be physically paired for collective insertion into a container via subsequent automatic operations. In the illustrated example, the document merging conveyor 29 is longer than the article merging conveyor 29'. In other examples, the merger conveyor 29 is shorter than the article merging conveyor 29'. In other examples, both merging conveyors 29, 29' are the same length. In the illustrated example, one aspect of the control provided by the PLC is to regulate the speeds of these two conveyors to ensure that the transaction document and article are accurately paired physically at the conflation area 30, despite the difference in physical length of the two conveyors. In the illustrated examples, the angle between these two conveyors 29 and 29' is a shallow one - in this example 22 degrees. This shallow angle is beneficial to improve (e.g., optimize) the transfer or movement of the transaction document across the gap between the conveyor 29 and the conflation area 30. Other critical parameters have also been improved (e.g., optimized) to increase the accuracy with which the article and the transaction document are physical grouped or combined in the conflation operation. Following this conflation, in some examples, the merged article and transaction document are then conveyed together toward the bagging/printing/apply station 40 by the conflated conveyor 31.

In some examples, a final read of the barcode (or other identifier) on the transaction document (even when the article is on top because the transaction document is face down) may be performed by a reader via a gap in the conflated conveyor. In such examples, the identifying information is passed to the DHS, which in turn can provide this information to the bagging/printing/apply station 40 so that the proper address information is printed on the shipping label.

In the above examples, properly associated article/transaction document pairs are deposited into a shipping container properly labeled with the shipping information associated with the article/transaction document pair - all without the need for manual intervention.

On occasion, following reading of the identifying information by the readers 16 and 16', the DHS may determine that the article and transaction document are not properly paired (e.g., are not associated with the same transaction order). In some examples, the system is designed to respond to such a situation by undertaking some corrective action. As an example, when the time comes for the bagging/printing/apply process, the DHS may provide an error code to the printing/apply station that will cause a visible or machine-readable error code to appear on the shipping label. A downstream reader or a human operator will then be able to detect this error code and direct the bagged article to another location for processing separate from that of the properly paired articles/transaction documents.

In addition to the printer 24 and document conveyor 20, the document sub-system may include other components. For example, a back-up printer 22 may be included to mimic the operation of printer 24 if it is damaged, malfunctions, or otherwise goes off-line. It may also be desirable to print and include other documents along with the transaction document in the shipping container with the article. Examples include product brochures, data sheets, coupons and/or other collateral materials. Toward that end, the document sub-system may include additional printers, such as those referred to as stream feeders, such as the stream feeder 26 for printing such other documents. By design, in some examples, these feeders are placed downstream from the transaction document printer, so that the other documents are placed on top of the face-down transaction document. This arrangement reduces the likelihood of (e.g., prevents) the other documents from inhibiting reading of the barcode or other identifier on the transaction document in the example conflation sub-system described above. One or a plurality of stream feeders may be provided, and are in communication with the DHS and are controlled by the DHS, which determines which other documents should be included with a given order and issues print commands to the appropriate sheet feeders based on that determination. The PLC may also be involved in control of the stream feeders based on information received from the DHS, and would also be responsible for controlling the speed of the document conveyor 20 to take into account the fact that preparation of a stack of documents was slowed down by virtue of one or more stream feeders adding to the stack.

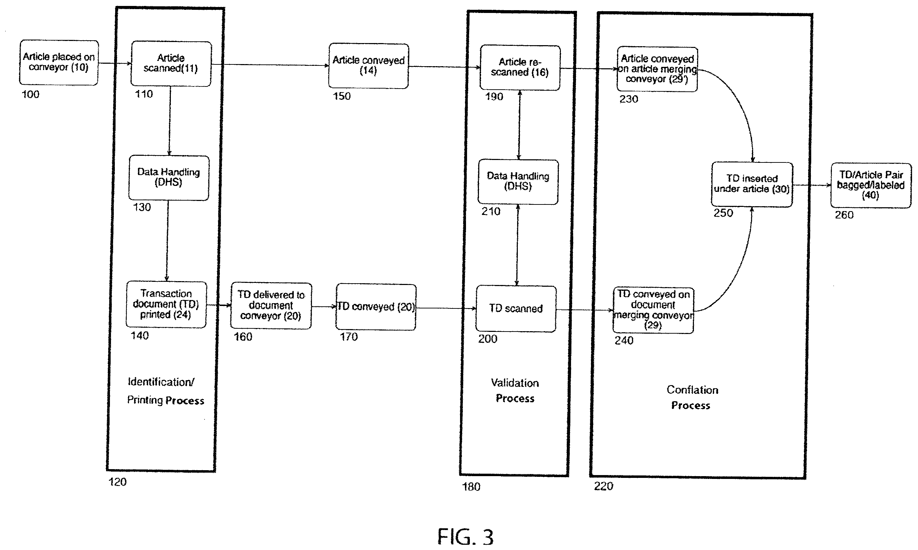

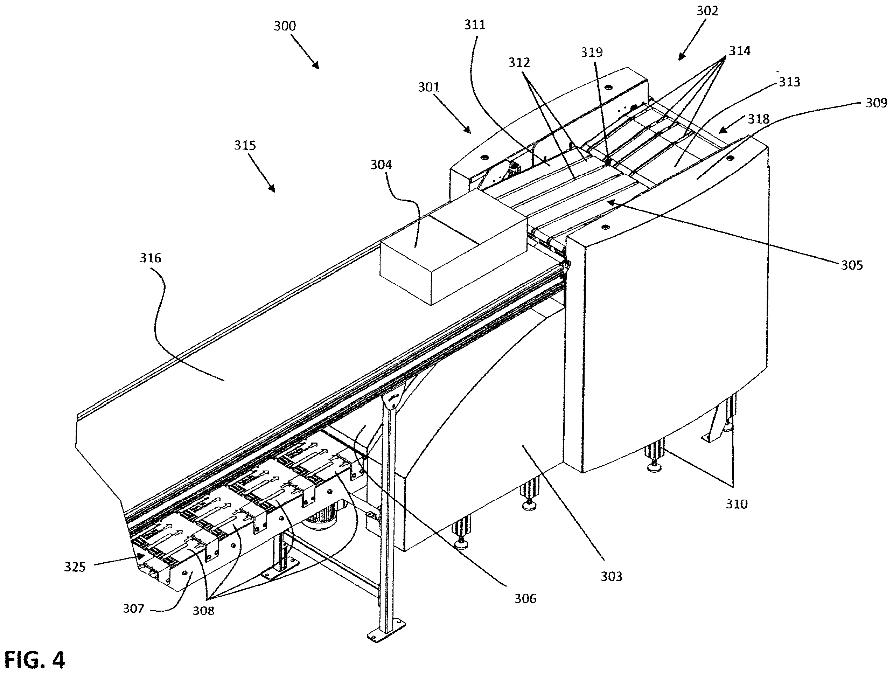

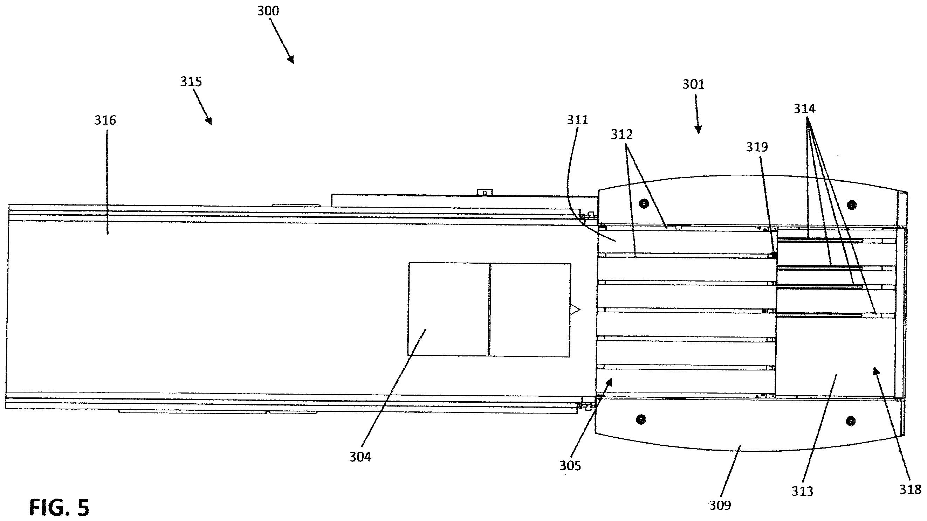

Accordingly, there has been presented a physical system capable of performing an article and document processing method as depicted in block form in Figure 3. According to this method, an article is placed on a conveyor at block 100. Next, as part of an Identification/Printing Block 120, the article is scanned at block 110 to read the identifying information thereon. In a Data Handling sub-process 130 within block 120, data is received from the scanner and the DHS determines the identity of the article and the transaction data associated with the article. Within block 130, the DHS then provides a transaction document (TD) to be printed at the printer - which printing occurs at block 140. As the article is then conveyed in block 150, the TD is delivered to the document conveyor at block 160, and then conveyed in block 170. It should be noted that these specific blocks, and others in the process may occur in slightly different orders than depicted here. For example, in some circumstances the TD may move along its conveyor (which is parallel to the article conveyor in this example) ahead of the article instead of vice-versa. As mentioned above, the speed and/or other operational parameters of the conveyors and/or other system components may be under control of a PLC, which is not depicted in this flowchart for sake of simplicity. In any event, the article and TD progress next to the Validation Block 180. In this block, each of these items is scanned to determine its identity. The article is scanned at block 190, and the TD is scanned at block 200. A Data Handling sub-process 210 occurs, in which the identifying data from the scans is provided to the DHS, which verifies that the scanned article and the scanned TD are associated with the same transaction. Assuming this to be the case, the process continues to the Conflation Block 220. In this block, both the article merging conveyor and the document merging conveyor are appropriately controlled (e.g. by the PLC) to convey the article and TD at block 230 and block 240, respectively - accurately positioning or grouping the article and TD together at block 250. Preferably, the TD is inserted under the article to complete the Conflation Block. Finally, the TD/article pair is bagged and labeled at block 260. While detailed operations within the three primary processes have been shown, the process/method may be broadly characterized by the major operations of: 1) Identification/Printing (block 120); 2) Validation (block 180); and 3) Conflation (block 220). There has thus been provided an article and document processing method that allows identification of an article and its associated transaction order, automated printing of a transaction document associated with the same transaction order, independent conveying of the article and transaction document, followed by a validation process for confirming that a given article and a given transaction document are associated with the same order. Following that validation, the article and transaction document are physically conflated and subsequently move together until they are deposited together in a shipping container properly labeled with the shipping information from the same order as the article/document pair inside the container. While above the focus of the description was more on the overall system, in the following further embodiments of an article and document conveyor are described with the focus on the conflated conveyor and the conflation of articles and documents, wherein initially more general explanations are made followed by a more detailed discussion under reference of Figs. 4 to 8c. All features described above also apply to the article and document conveyor described in the following.

According to the invention, the article and document conveyor comprises an article merging conveyor including an article conveying surface adapted to convey articles, a document merging conveyor including a document conveying surface adapted to convey documents, and a conflated conveyor including a conveying surface part. Both the conveying surface part and the document conveying surface form a combined conveying surface of the conflated conveyor.

The article merging conveyor may convey any type of articles and the present invention is not limited to a specific article to be conveyed.

The document merging conveyor may convey any type of documents, e.g. paper documents (transaction documents), flyers or the like and it may be configured to convey document stacks.

The conflated conveyor includes a conveying surface part which is different from the document conveying surface and which may be driven by the conflated conveyor.

The conveying surface part and the document conveying surface form a combined conveying surface, which allows that a document or a document stack which is conveyed by the document conveying surface can be located under an article conveyed by the article conveying surface on the combined conveying surface.

A front edge of the article conveying surface can be located above the combined conveying surface such that an article falls down onto a document conveyed by the document conveying surface. As the document conveying surface extends into the combined conveying surface a respective document can be located underneath the front edge of the article conveying surface such that a respective article can fall onto the document conveyed by the combined conveying surface.

Thereby, an article can be conflated or paired with an associated document or document stack, as also described above in connection with Figs. 1 to 3.

As the article lies onto the document(s) on the combined conveying surface, the stacked formed by the article and the document(s) can be conveyed together by the conflated conveyor and, moreover, as the article weighs down the document or document stack on which it lies, the document(s) are hindered from slipping around or from being lifted by a draft or the like. Hence, in some embodiments the document merging conveyor, the article merging conveyor, and the conflated conveyor are such configured that a document conveyed by the document merging conveyor is positioned underneath an article conveyed by the article merging conveyor on the combined conveying surface of the conflated conveyor.

In some embodiments, the document merging conveyor comprises a rope conveyor. The rope conveyor of the document merging conveyor may include multiple ropes for conveying of the documents. The ropes may be arranged in parallel to each other with gaps between them which are larger than the lateral extension of the ropes itself.

In some embodiments, the article merging conveyor comprises a belt conveyor. In contrast to the rope conveyor, the belt of the belt conveyor may have a much larger lateral extension than each of the ropes of the rope conveyor.

According to the invention, the document conveying surface and the conveying surface part of the conflated conveyor engage into each other and/or are interleaved. This can be achieved by arranging parts of the conveying surface part and the parts of the document conveying surface next to each other, for example, in an alternating manner. Thereby, the documents conveyed by the document conveying surface are continuously conveyed also in a transition region between the document merging conveyor and the conflated conveyor.

Moreover, the conveying surface part of the conflated conveyor may be adapted to convey articles, such that the combined conveying surface is adapted to convey documents, at least due to the document conveying surface being part of the combined conveying surface, and simultaneously, the combined conveying surface is adapted to convey articles, at least due to the conveying surface part being adapted to convey articles.

In some embodiments, the conveying surface part of the conflated conveyor includes at least one gap between a first conveying surface part and a second conveying surface part and wherein the document conveying surface is at least partially located in the gap between the first and second conveying surface parts.

The conveying surface part of the conflated conveyor may include multiple first, second, third, etc. conveying surface parts, e.g. such many parts that a resulting number of gaps between the respective multiple conveying surface parts corresponds to the number of ropes of the document conveying surface, such that each one rope is interposed in a gap between two first and second conveying surface parts. Thereby, the document conveying surface and the conveying surface part engage each other and are interleaved. This may result in an equal or at least defined distribution of the document conveying surface and the conveying surface part at least partly in the area of the combined conveying surface.

In some embodiments the document merging conveyor comprises at least one parking position for documents to be conveyed. Thereby, the timing of the conveying of the document can be such adjusted that it will be located under the article on the combined conveying surface. For example, by parking a document in the parking position it can be waited until an article with which the document is to be merged is present. Thereby, the article and the document can such be conveyed to the conflated conveyor that the document and the article are conflated.

In some embodiments, the document merging conveyor comprises at least two conveyor sections which can be driven independently from each other, thereby a document can be parked, for example, in a first conveyor section while a document being located on a second conveyor section can be conveyed to the conflated conveyor.

In some embodiments, the document merging conveyor comprises at least two conveying surfaces between which documents to be conveyed are clamped. Thereby, not only the conveying of single documents is possible, but also conveying of document stacks including multiple documents. By clamping a document stack between the two conveying surfaces the documents of the document stack are kept together and do not slip, e.g. due to a friction between the documents of the document stack. Hence, the first and second conveying surface exert counteracting forces on the document(s) clamped between them.

The two conveying surfaces can each include multiple ropes, such that ropes of a first conveying surface are located, for example, under the document(s) and ropes of a second conveying surface are located above the document(s) to be conveyed. Moreover, the ropes of the first and second conveying surfaces may be arranged such that they are located opposite to each other or such that they are laterally displaced to each other (laterally is to be understood as lateral to the conveying direction).

The article and document conveyor system of the invention comprises a further document conveyor upstream to the document merging conveyor, which additionally includes a staging table.

The term "upstream" means that the document conveyor is such located that documents are conveyed from the document conveyor in the direction to the document merging conveyor.

The staging table is configured to park at least one document or document stack.

The staging table may comprise at least two independently driven conveyor sections, such that, for example, a first conveyor section can park a document and the second conveyor section can convey a document.

The staging table comprises at least one document holder which is adapted to hold documents (at least partially) above a conveying surface of the document conveyor when being in an operating position. Thereby, the order of documents can be changed, since a document can be conveyed under a document held by the document holder.

The document holder may be held via a magnetic force in the operating position. For instance, a lifting device may be provided which is vertically arranged and which includes a bolt which can be lifted upwardly by a magnetic force, thereby also lifting the document holder. Of course, the lifting device may also include a hydraulic, pneumatic, electric or any other type of drive which is capable of lifting a document holder.

The document holder may be located below the conveying surface of the document conveyor when being in a stationary position. Thereby, the document holder does not hinder the conveying of documents.

The document holder may have a grate structure. In cases, where the conveying surface of the document conveyor includes, for example, ropes or multiple belts having a gap in between, the grate structure of the document holder can be such adapted that it can be moved through the gaps when being lifted upwardly.

Additionally, the document holder may have a vertical structure which can provide a stop for documents being conveyed when the document holder is in its operating position. Thereby, documents of a documents stack can be aligned at the vertical structure.

In some embodiments, the document conveying surface at least partially extends below the article conveying surface. This allows a compact arrangement of the document merging conveyor and the article merging conveyor. Moreover, it allows that documents are conveyed from underneath the articles on the article conveying surface such that a document can be located below an article on the combined conveying surface.

The document conveying surface may be inclined with respect to the article conveying surface and an angle between the document conveying surface and the article conveying surface may be less than 25 degrees. The inclination of the document conveying surface allows to convey documents from a lower lever to a higher level in the height of the conflated conveyor. Moreover, thereby, for example, a height distance between a front edge of the article conveying surface and the combined conveying surface of the conflated conveyor can be reduced.

According to a second aspect of the invention, an article and document processing method comprises identifying an article and its associated transaction, printing a transaction document associated with the transaction, independently conveying the article and the transaction document, confirming that the article and the transaction document are associated with the same transaction, physically conflating the article and the transaction document, and moving the conflated article and transaction document together until they are deposited together in a shipping container.

The method is performed with an article and document conveyor as described above. The method can be implemented as software, a computer program or the like, which includes instructions causing a processor-based system to execute the respective method as described. The method can also be implemented in an overall control which is configured to control the article and document conveyor described above to execute the method described herein.

The method may further comprise physically conflating the article and the transaction document with the transaction document being placed underneath the article.

In the following, an embodiment of an article and document conveyor 300 is described under reference of Figs. 4 to 8c.

The article and document conveyor 300 has an article merging conveyor 301 to which articles, such as article 304, are conveyed by an upstream located article conveyor 315 having a conveying surface 16 and being configured as belt conveyor.

The article merging conveyor 301 has an article conveying surface 305 and it is configured as a belt conveyor having a belt 311 which has multiple belt parts which are separate by gaps 312 from each other.

A document merging conveyor 303 is provided partially below the article conveyor 315 and partially below the article merging conveyor 301. The document merging conveyor 303 has a document conveying surface 306. The document merging conveyor 303 is inclined such that documents are conveyed upwardly towards the article merging conveyor.

The document conveying surface 306 extends below the (upstream) article conveyor 315 and the article merging conveyor 301 and it extends beyond a front edge 319 of the article conveying surface 305 of the article merging conveyor 301 and to a conflated conveyor 302.

The conflated conveyor 302 is located downstream and adjacent to the article merging conveyor 301. It has a combined conveying surface 318 which is formed by a conveying surface part 313 which is formed in this example by a belt having five stripes and four gaps.

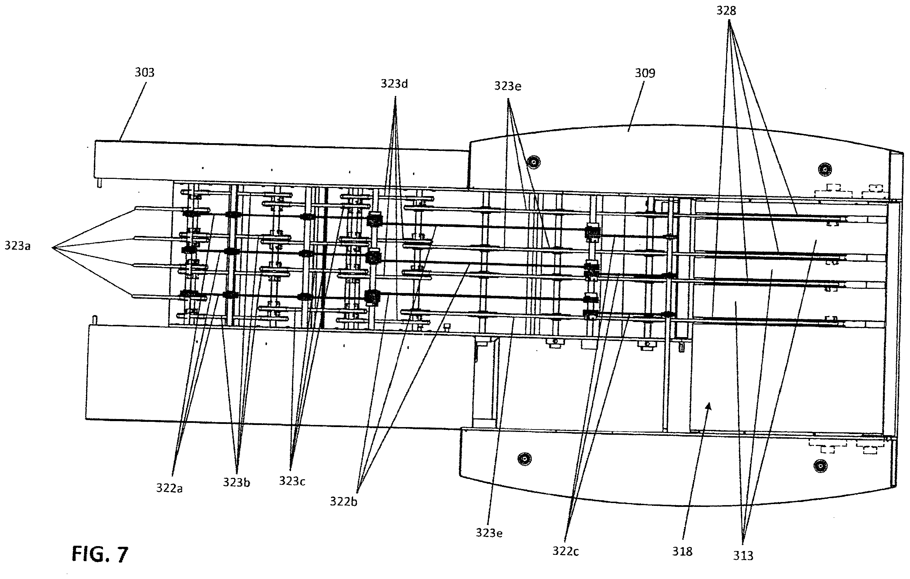

The document conveying surface 306 has multiple, in the present embodiment four ropes 314 which extend into the combined conveying surface 318, i.e. into the gaps 328 (Fig. 7) between the belt stripes of belt 313. Hence, each of the ropes 314 is interposed between two belt stripes of the belt 313, such that the ropes 314 and the belt 313 form together the combined conveying surface 308 of the conflated conveyor 302.

The article merging conveyor 301, the conflated conveyor 302 and a part of the document merging conveyor 303 are located in the same housing 309 which stands with feet 310 on a floor.

Under the (upstream) article conveyor 315 a document conveyor 307 is located upstream with respect to the document merging conveyor 303, such that documents which are conveyed on a document conveying surface 325 of the document conveyor 307 are conveyed to the document merging conveyor 303.

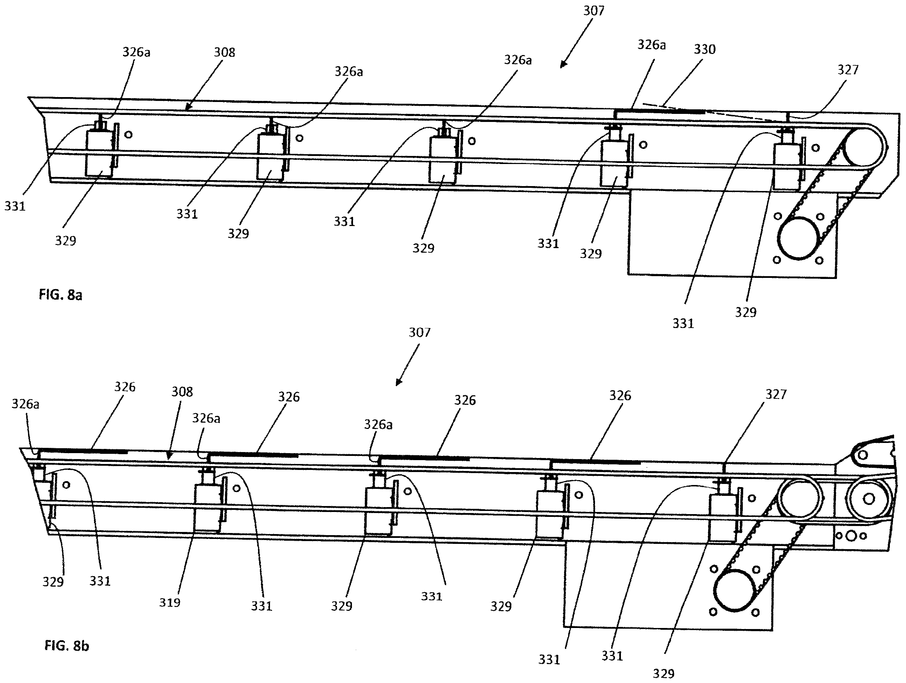

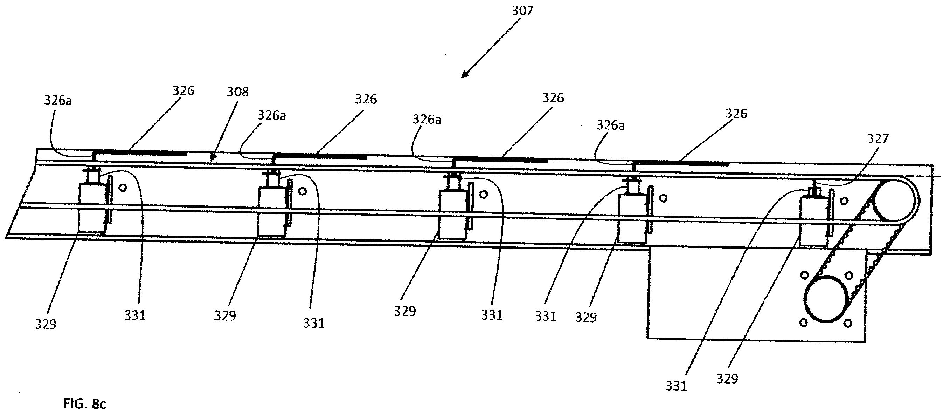

The (upstream) document conveyor 307 has a rope conveying surface 325 and an area with multiple parking positions 308 provided by respective document holders 326 (see in particular Figs. 8a-c) adjacent to the document merging conveyor 303 (see Fig. 4).

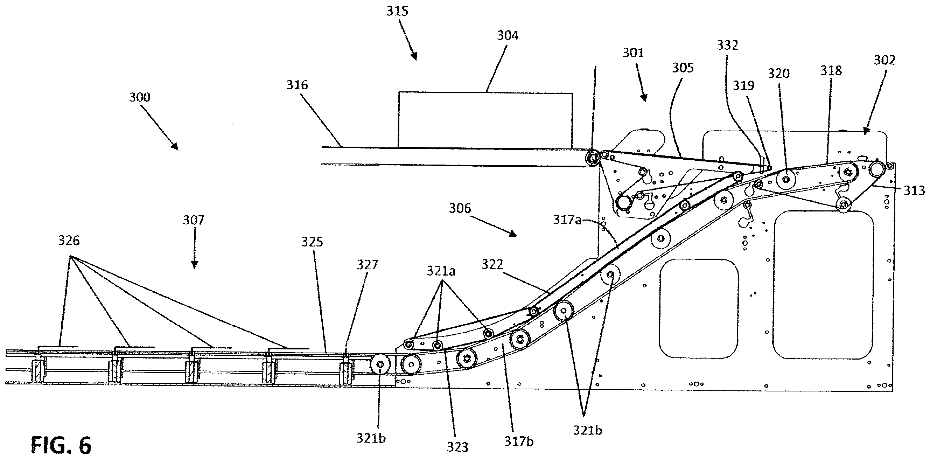

As can also be taken from Figs. 6 and 7, the document merging conveyor 303 has an upper conveying part 317a with multiple upper ropes 322a-c (Fig. 7) forming an upper conveying surface 322 and a lower conveying part 317b with a lower conveying surface 323 formed by multiple ropes 323a-e (see Fig. 7). The multiple upper ropes 322a-c are guided over respective upper pulleys 321a and the multiple lower ropes 323a-e are guided over respective lower pulleys 321b.

Documents which are conveyed by the document merging conveyor 303 are clamped between the upper conveying surface 322 and the lower conveying surface 323, i.e. between the upper ropes 322a-c and the lower ropes 323a-e.

As is shown in more detail in Fig. 7, the upper ropes 322a-c, which are depicted as full black lines, are laterally displaced with respect to the lower ropes 323a-e, which are depicted as lines filled with white color.

The document merging conveyor 303 has several sections of upper ropes 322a-c and of lower ropes 323a-e, wherein each section of upper ropes 322a-c has three upper ropes and each section of lower ropes 323a-e has four ropes.

A first lower rope section has four lower ropes 323a, as can be taken from the left side of Fig. 7 (associated lower ropes are not illustrated), a second has four lower ropes 323b, a third has four lower ropes 323c, a fourth has four lower ropes 323d and a fifth has four lower ropes 323e.

A first upper rope section has three upper ropes 322a, a second has three upper ropes 322b, and a third has three upper ropes 322c.

The respective upper and lower rope sections are interconnected via upper pulleys 321a and lower pulleys 321b, respectively, with each other, wherein the upper pulleys 321a are displaced in the conveying direction with respect to lower pulleys 321b. Thereby, a smooth distribution of the clamping forces exerted by the upper 322a-c and lower ropes 323a-e is caused. The height distance between the upper 322a-c and lower ropes 323a-e is such adjusted that a document or document stack is clamped between them. The clamping force origins i. a. from an elastic force generated by the upper and/or lower ropes 322a-c, 323a-e made of an elastic material, e.g. rubber or any kind of elastic plastic composites. Additionally, this setup of displaced ropes and pulleys allows a smooth conveying surface in view of the inclination of the document merging conveyor 303. Moreover, it allows a guidance for the document merging conveyor 303 which can be curved.

The - in downstream direction - last section of lower ropes 323e extends beyond the article merging conveyor 301 into the conflated conveyor 302 and those ropes 323e engage into gaps 328 in the conveying surface part 313, as also discussed above, thereby allowing a continuous conveying from the document merging conveyor 303 beyond the front edge 319 of the article merging conveyor 301 into the conflated conveyor 302.

In some embodiments, sections of the upper and lower ropes are driven independently from each other, such that one or more parking positions can be provided, e.g. one parking position per section.

Furthermore, the article merging conveyor 301 can be height adjusted such that the distance of its front edge to the conflated conveyor 302 can be adjusted, e.g. to particular heights of documents or documents stacks. An elongated hole 332 is provided in the housing 309 on each side in the region of the front edge 319 such that the front edge 319 can be fixed, e.g. via a screw-bolt connection in a given height in the elongated hole 332. For height adjustment, the article merging conveyor 301 can be rotated about a pivot axis 333 provided at a rear end being opposite to the front edge 319, thereby adjusting the distance between the front edge 319 and the combined conveying surface 318.

As mentioned above, the (upstream) document conveyor 307 has several parking positions 308 provided by a corresponding number of document holder 326, namely exemplary four in the present embodiment, which is discussed in more detail under reference to Figs. 8a to 8c in the following.

Each document holder 326 has a horizontal grate structure and a vertical structure 326a which is connected to a bolt 331 of an associated magnetic drive 329. In a region next to the document merging conveyor 303, a front stop 327 is provided which is in turn connected to a respective bolt 331 of a magnetic drive 329.

The document holder 326 and the front stop 327 are located below the conveying surface 308 when being in their stationary position such that they do not hinder conveying of documents and they are located above the conveying surface 308 when being in their respective operating position.

As can be taken from Figs. 8a to 8c, a typical process of controlling the document holders 326 and the front stop 327 is the following.

At first, the front stop 327, which extends in a vertical direction, is lifted upwardly by driving the drive 331 accordingly, which lifts up the bolt 331. Thereby documents which are conveyed on the conveying surface 308 of the (upstream) document conveyor 307 are stopped at the front stop 327 and are aligned. Hence, if, for example, a document stack (330 in Fig. 8a) is conveyed the single documents of the document stack 330 can be re-aligned by abutting against the front stop 327.

At next, a first document holder 326 being located adjacent and upstream to the front stop 327 can be lifted by driving its drive 329 accordingly. Thereby, the bolt 331 which is connected to the respective vertical structure 326 is lifted upwardly. The document holder 326 is such located that it also lifts the document stack 330 such that the document stack is inclined and located partially above the conveying surface 316, wherein the lower edge of the document stack 330 abuts against the front stop 327.

As the vertical structure 326a of the document holder 326 is lifted upwardly and extends above the conveying surface 308, a next document stack will now abut against the vertical structure 326a of the first document holder 326. If now, the second document holder 326, i.e. the document holder upstream to the first document holder 326, is lifted upwardly by driving its associated drive 329 accordingly, the document stack abutting against the vertical structure 326a of the first document holder 326 is lifted upwardly in the same manner as described for the document stack 330 above, etc.

A situation where all document holders 326 are lifted upwardly in their operating position is shown in Fig. 8b. Here, all parking positions provided by the document holders 326 are occupied.

Documents are released by moving the front stop 327 and the document holders 326 back in their stationary position in the reverse order than they have been lifted/activated in their operating position. At first, the front stop 327 is moved back in its stationary position, whereby a document stack abutting against it is released and conveyed to the document merging conveyor 303. At next, the first document holder 326 is moved downwardly in its stationary position, thereby releasing the next document stack, etc.

As discussed above, a document or a document stack is located below an associated article. Hence, the timing of conveying articles and associated documents is to be controlled by a respective control (including e.g. a DHS and PLC as discussed above in connection with Figs. 1 to 3) such that the article and its associated document are at the same position on the conflated conveyor 302 at the same point of time, as also discussed above in connection with Figs. 1 to 3 and as discussed above, such that they can be conflated with each other.

The control has the information which article and which document is being conveyed to the conflated conveyor 302 by respective scanner and reading stations 11, 16 and 16' as discussed above in detail. Thereby, the control is able to control, for example, the respective document holders and/or parking position at the document merging conveyor 303 in order to ensure that a document is provided at the proper point of time at the conflated conveyor 302 when its associated article is conveyed to the conflated conveyor 303. Additionally, in some embodiment, a respective speed of the conveying surface of the article merging conveyor 301, the document conveyor 307 and/or the document merging conveyor 303 may be controlled by the control for ensuring that an article is conflated with an associated document at the combined conveying surface 318 of the conflated conveyor 303.

## Claims

1. An article and document conveyor (300) comprising:
a conflated conveyor (302) including a conveying surface part (313);
an article merging conveyor (301) including an article conveying surface (305) adapted to convey articles (304) to the conflated conveyor (302),
a document merging conveyor (303) including a document conveying surface (306) adapted to convey documents to the conflated conveyor (302), and
a further document conveyor (307) upstream to the document merging conveyor (303) for feeding documents to the document merging conveyor,
**characterized in that**
the conveying surface part (313) and the document conveying surface (306) engage into each other at a transition region such as to form a combined conveying surface (318) at this transition region,
and **in that**
the further document conveyor (307) comprises at least one document holder (326) for parking at least one document or document stack, which at least one document holder is adapted to hold documents above a conveying surface of the further document conveyor when being in an operating position.

2. The conveyor (300) of claim 1, wherein the document merging conveyor (303), the article merging conveyor (301), and the conflated conveyor (302) are such configured that a document conveyed by the document merging conveyor (303) is positioned underneath an article conveyed by the article merging conveyor (301) on the combined conveying surface (318) of the conflated conveyor (302).

3. The conveyor (300) of anyone of the preceding claims, wherein the document merging conveyor (303) comprises a rope conveyor.

4. The conveyor (300) of anyone of the preceding claims, wherein the article merging conveyor (301) comprises a belt conveyor.

5. The conveyor (300) of anyone of the preceding claims, wherein the document conveying surface (306) and the conveying surface part (313) of the conflated conveyor (302) engage into each other.

6. The conveyor (300) of claim 5, wherein the document conveying surface (306) and the conveying surface part (313) of the conflated conveyor (302) are interleaved.

7. The conveyor (300) of anyone of the preceding claims, wherein the conveying surface part (313) of the conflated conveyor (302) includes at least one gap (328) between a first conveying surface part (313) and a second conveying surface part (313) and wherein the document conveying surface (306) is at least partially located in the gap (328) between the first and second conveying surface parts (313).

8. The conveyor (300) of anyone of the preceding claims, wherein the document merging conveyor (303) comprises at least two conveyor sections which can be driven independently from each other.

9. The conveyor (300) of the preceding claim, wherein the at least two conveyor sections are configured such that a first document can be parked in a first one of the conveyor sections, while a second document located on a second one of the conveyor sections can be conveyed to the conflated conveyor.

10. The conveyor (300) of anyone of the preceding claims, wherein the document merging conveyor (303) comprises at least two conveying surfaces between which documents to be conveyed are clamped.

11. The conveyor (300) of anyone of the preceding claims, wherein the further document conveyor (307) comprises at least two independently driven conveyor sections.

12. The conveyor (300) of anyone of the preceding claims , wherein the document holder (326) is held via a magnetic force in the operating position.

13. The conveyor (300) of anyone of the preceding claims , wherein the document holder (326) is located below the conveying surface (325) of the document conveyor (307) when being in a stationary position.

14. The conveyor (300) of anyone of the preceding claims, wherein the document holder (326) has a grate structure.

15. The conveyor (300) of anyone of the preceding claims, wherein the document conveying surface (306) at least partially extends below the article conveying surface (305).

16. The conveyor (300) of anyone of the preceding claims, wherein the document conveying surface (306) is inclined with respect to the article conveying surface (305).

17. The conveyor (300) of claim 16, wherein an angle between the document conveying surface (306) and the article conveying surface (305) is less than 25 degrees.

18. An article and document processing method, comprising:
- identifying an article (304) and its associated transaction,- printing a transaction document associated with the transaction,
- independently conveying the article (304) and the transaction document using an article and document conveyor (300) according to one of the preceding claims,
- confirming that the article (304) and the transaction document are associated with the same transaction,
- physically conflating the article (304) and the transaction document using said article and document conveyor (300), and
- moving the conflated article and transaction document together until they are deposited together in a shipping container.

19. The method of claim 18, further comprising physically conflating the article and the transaction document with the transaction document being placed underneath the article.

## Patentansprüche

1. Artikel- und Dokumentenförderer (300), umfassend:
einen kombinierten Förderer (302), der einen Förderflächenteil (313) beinhaltet;
einen Artikelzusammenführungsförderer (301), der eine Artikelförderfläche (305) beinhaltet, die dazu angepasst ist, Artikel (304) zu dem kombinierten Förderer (302) zu befördern,
einen Dokumentenzusammenführungsförderer (303), der eine Dokumentenförderfläche (306) beinhaltet, die dazu angepasst ist, Dokumente zu dem kombinierten Förderer (302) zu befördern, und
einen weiteren Dokumentenförderer (307) stromaufwärts des Dokumentenzusammenführungsförderers (303) zum Zuführen von Dokumenten zu dem Dokumentenzusammenführungsförderer,
**dadurch gekennzeichnet, dass**
das Förderflächenteil (313) und die Dokumentenförderfläche (306) an einer Übergangsregion miteinander in Eingriff stehen, um an dieser Übergangsregion eine Kombinationsförderfläche (318) zu bilden,
und dadurch, dass
der weitere Dokumentenförderer (307) mindestens einen Dokumentenhalter (326) zum Ablegen mindestens eines Dokuments oder Dokumentenstapels umfasst, wobei der mindestens eine Dokumentenhalter dazu angepasst ist, Dokumente über einer Förderfläche des weiteren Dokumentenförderers zu halten, wenn er in einer Betriebsposition ist.

2. Förderer (300) nach Anspruch 1, wobei der Dokumentenzusammenführungsförderer (303), der Artikelzusammenführungsförderer (301) und der kombinierte Förderer (302) derart konfiguriert sind, dass ein von dem Dokumentenzuführungsförderer (303) befördertes Dokument unterhalb eines Artikels positioniert ist, der durch den Artikelzusammenführungsförderer (301) auf der Kombinationsförderfläche (318) des kombinierten Förderers (302) befördert wird.

3. Förderer (300) nach einem der vorhergehenden Ansprüche, wobei der Dokumentenzusammenführungsförderer (303) einen Seilförderer umfasst.

4. Förderer (300) nach einem der vorhergehenden Ansprüche, wobei der Artikelzusammenführungsförderer (301) einen Bandförderer umfasst.

5. Förderer (300) nach einem der vorhergehenden Ansprüche, wobei die Dokumentenförderfläche (306) und der Förderflächenteil (313) des kombinierten Förderers (302) miteinander in Eingriff stehen.

6. Förderer (300) nach Anspruch 5, wobei sich die Dokumentenförderfläche (306) und der Förderflächenteil (313) des kombinierten Förderers (302) überlappen.

7. Förderer (300) nach einem der vorhergehenden Ansprüche, wobei der Förderflächenteil (313) des kombinierten Förderers (302) mindestens einen Spalt (328) zwischen einem ersten Förderflächenteil (313) und einem zweiten Förderflächenteil (313) beinhaltet und wobei die Dokumentenförderfläche (306) mindestens teilweise in dem Spalt (328) zwischen dem ersten und zweiten Transportoberflächenteil (313) angeordnet ist.

8. Förderer (300) nach einem der vorhergehenden Ansprüche, wobei der Dokumentenzusammenführungsförderer (303) mindestens zwei Förderabschnitte umfasst, die unabhängig voneinander angetrieben werden können.

9. Förderer (300) nach dem vorhergehenden Anspruch, wobei die mindestens zwei Fördererabschnitte derart konfiguriert sind, dass ein erstes Dokument in einem ersten der Fördererabschnitte abgelegt werden kann, während ein zweites Dokument an einem zweiten der Fördererabschnitte dem kombinierten Förderer zugeführt werden kann.

10. Förderer (300) nach einem der vorhergehenden Ansprüche, wobei der Dokumentenzusammenführungsförderer (303) mindestens zwei Förderflächen umfasst, zwischen denen zu transportierende Dokumente geklemmt sind.

11. Förderer (300) nach einem der vorhergehenden Ansprüche, wobei der weitere Dokumentenförderer (307) mindestens zwei unabhängig angetriebene Förderabschnitte umfasst.

12. Förderer (300) nach einem der vorhergehenden Ansprüche, wobei der Dokumentenhalter (326) über eine Magnetkraft in der Betriebsposition gehalten wird.

13. Förderer (300) nach einem der vorhergehenden Ansprüche, wobei sich der Dokumentenhalter (326) unterhalb der Förderfläche (325) des Dokumentenförderers (307) befindet, wenn er sich in einer stationären Position befindet.

14. Förderer (300) nach einem der vorhergehenden Ansprüche, wobei der Dokumentenhalter (326) eine Gitterstruktur aufweist.

15. Förderer (300) nach einem der vorhergehenden Ansprüche, wobei sich die Dokumentenförderfläche (306) mindestens teilweise unterhalb der Artikelförderfläche (305) erstreckt.

16. Förderer (300) nach einem der vorhergehenden Ansprüche, wobei die Dokumentenförderfläche (306) in Bezug auf die Artikelförderfläche (305) geneigt ist.

17. Förderer (300) nach Anspruch 16, wobei ein Winkel zwischen der Dokumentförderfläche (306) und der Artikelförderfläche (305) kleiner als 25 Grad ist.

18. Artikel- und Dokumentenverarbeitungsverfahren, umfassend:
- Identifizieren eines Artikels (304) und seiner zugeordneten Transaktion, - Drucken eines Transaktionsdokuments, das der Transaktion zugeordnet ist,
- unabhängiges Befördern des Artikels (304) und des Transaktionsdokuments unter Verwendung eines Artikel- und Dokumentförderers (300) nach einem der vorhergehenden Ansprüche,
- Bestätigen, dass der Artikel (304) und das Transaktionsdokument derselben Transaktion zugeordnet sind,
- physisches Kombinieren des Artikels (304) und des Transaktionsdokuments unter Verwendung des Artikel- und Dokumentenförderers (300) und
- Bewegen des kombinierten Artikels und Transaktionsdokuments zusammen, bis sie zusammen in einem Versandbehälter deponiert sind.

19. Verfahren nach Anspruch 18, ferner umfassend physisches Kombinieren des Artikels und des Transaktionsdokuments, wobei das Transaktionsdokument unterhalb des Artikels platziert wird.

## Revendications

1. Transporteur d'articles et de documents (300) comprenant :
un transporteur regroupé (302) comportant une partie de surface de transport (313) ;
un transporteur de fusion d'articles (301) comportant une surface de transport d'articles (305) adaptée pour transporter des articles (304) vers le transporteur regroupé (302),
un transporteur de fusion de documents (303) comportant une surface de transport de documents (306) adaptée pour transporter des documents vers le transporteur regroupé (302), et
un autre transporteur de documents (307) en amont du transporteur de fusion de documents (303) pour alimenter en documents le transporteur de fusion de documents,
**caractérisé en ce que**
la partie de surface de transport (313) et la surface de transport de document (306) viennent en prise l'une dans l'autre au niveau d'une région de transition de manière à former une surface de transport combinée (318) au niveau de cette région de transition,
et **en ce que**
l'autre transporteur de documents (307) comprend au moins un porte-documents (326) pour garer au moins un document ou une pile de documents, lequel au moins un porte-documents est adapté pour maintenir des documents au-dessus d'une surface de transport de l'autre transporteur de documents lorsqu'il se trouve dans une position de fonctionnement.

2. Transporteur (300) selon la revendication 1, dans lequel le transporteur de fusion de documents (303), le transporteur de fusion d'articles (301) et le transporteur regroupé (302) sont configurés de sorte qu'un document transporté par le transporteur de fusion de documents (303) est positionné sous un article transporté par le transporteur de fusion d'articles (301) sur la surface de transport combinée (318) du transporteur regroupé (302).

3. Transporteur (300) selon l'une quelconque des revendications précédentes, dans lequel le transporteur de fusion de documents (303) comprend un transporteur à câble.

4. Transporteur (300) selon l'une quelconque des revendications précédentes, dans lequel le transporteur de fusion d'articles (301) comprend un convoyeur à bande.

5. Transporteur (300) selon l'une quelconque des revendications précédentes, dans lequel la surface de transport de documents (306) et la partie de surface de transport (313) du transporteur regroupé (302) viennent en prise l'une dans l'autre.

6. Transporteur (300) selon la revendication 5, dans lequel la surface de transport de documents (306) et la partie de surface de transport (313) du transporteur regroupé (302) sont imbriquées.

7. Transporteur (300) selon l'une quelconque des revendications précédentes, dans lequel la partie de surface de transport (313) du transporteur regroupé (302) comporte au moins un espace (328) entre une première partie de surface de transport (313) et une seconde partie de surface de transport (313) et dans lequel la surface de transport de documents (306) est au moins partiellement située dans l'espace (328) entre les première et seconde parties de surface de transport (313).

8. Transporteur (300) selon l'une quelconque des revendications précédentes, dans lequel le transporteur de fusion de documents (303) comprend au moins deux sections de transporteur qui peuvent être entraînées indépendamment l'une de l'autre.

9. Transporteur (300) selon la revendication précédente, dans lequel les au moins deux sections de transporteur sont configurées de sorte qu'un premier document peut être conservé dans une première des sections de transporteur, tandis qu'un second document situé sur une seconde des sections de transporteur peut être transporté vers le transporteur regroupé.

10. Transporteur (300) selon l'une quelconque des revendications précédentes, dans lequel le transporteur de fusion de documents (303) comprend au moins deux surfaces de transport entre lesquelles les documents à transporter sont serrés.

11. Transporteur (300) selon l'une quelconque des revendications précédentes, dans lequel l'autre transporteur de documents (307) comprend au moins deux sections de transporteur entraînées de manière indépendante.

12. Transporteur (300) selon l'une quelconque des revendications précédentes, dans lequel le porte-documents (326) est maintenu dans la position de fonctionnement à l'aide d'une force magnétique.

13. Transporteur (300) selon l'une quelconque des revendications précédentes, dans lequel le porte-documents (326) est situé sous la surface de transport (325) du transporteur de documents (307) lorsqu'il est dans une position fixe.

14. Transporteur (300) selon l'une quelconque des revendications précédentes, dans lequel le porte-documents (326) a une structure en forme de grille.

15. Transporteur (300) selon l'une quelconque des revendications précédentes, dans lequel la surface de transport de documents (306) s'étend au moins partiellement au-dessous de la surface de transport d'articles (305).

16. Transporteur (300) selon l'une quelconque des revendications précédentes, dans lequel la surface de transport de documents (306) est inclinée par rapport à la surface de transport d'articles (305).

17. Transporteur (300) selon la revendication 16, dans lequel un angle entre la surface de transport de documents (306) et la surface de transport d'articles (305) est inférieur à 25 degrés.

18. Procédé de traitement d'articles et de documents, comprenant :
- l'identification d'un article (304) et de sa transaction associée,
- l'impression d'un document de transaction associé à la transaction,
- le transport indépendant de l'article (304) et du document de transaction à l'aide d'un transporteur d'articles et de documents (300) selon l'une des revendications précédentes,
- confirmer que l'article (304) et le document de transaction sont associés à la même transaction,
- le regroupement physique de l'article (304) et du document de transaction à l'aide dudit transporteur d'articles et de documents (300), et
- le déplacement conjoint de l'article et du document de transaction regroupés jusqu'à ce qu'ils soient déposés ensemble dans un conteneur d'expédition.

19. Procédé selon la revendication 18, comprenant en outre le regroupement physique de l'article et du document de transaction avec le document de transaction placé sous l'article.
